# EUROPÄISCHE PATENTSCHRIFT

(11) **EP 2 261 534 B1**
(45) Veröffentlichungstag und Bekanntmachung des Hinweises auf die Patenterteilung: **04.04.2012**
(21) Anmeldenummer: 10159452.1
(22) Anmeldetag: 09.04.2010
(51) Int. Cl.: F16H 57/04, F16H 57/02

(54) **Industriegetriebe**
Industrial transmission
Engrenage industriel

(30) Priorität: 10.06.2009 DE 102009025027
(43) Veröffentlichungstag der Anmeldung: 15.12.2010
(73) Patentinhaber: Siemens Aktiengesellschaft, 80333 München (DE)
(72) Erfinder: Messink, Christoph, 46399, Bocholt (DE)

(56) Entgegenhaltungen:
- EP-A2- 0 853 225
- EP-A2- 0 990 820
- DE-A1- 3 606 963
- DE-A1-102006 020 801
- DE-A1-102006 031 280
- GB-A- 1 552 866
- US-A- 5 072 784

## Beschreibung

Industriegetrieben kommt in industriellen Verarbeitungs- und Fertigungsprozessen vielfach eine zentrale Bedeutung zu. An Industriegetriebe wird eine breite Palette von komplexen Anforderungen gestellt. Beispielsweise ist eine dieser Anforderungen eine zuverlässige Funktion über eine lange Nutzungsdauer bei minimalem Wartungsaufwand. Industrielle Verarbeitungs- und Fertigungsprozesse beeinträchtigende Getriebeausfälle können teuer werden, beispielsweise aufgrund kostspieliger Stillstandszeiten.

Aus DE 103 15 684 A1 ist ein Getriebe bekannt, bei dem ein Rohrwärmetauscher als Ölkühler verwendet wird, der in ein Getriebegehäuse integriert ist. Durch eine Ölpumpe, die dem Rohrwärmetauscher nachgeschaltet ist, wird Öl aus einem Ölsumpf abgesaugt und umströmt dabei den Rohrwärmetauscher. Nach einer Kühlung des Öls im Rohrwärmetauscher wird das Öl durch die Ölpumpe zu Schmierungsstellen innerhalb des Getriebes gefördert.

In DE 10 2004 022 863 A1 ist ein Getriebe beschrieben, das ein durch einen Gehäusedeckel dicht und lösbar verschlossenes Gehäuse aufweist. Darüber hinaus umfaßt der Deckel eine Kühlfinger oder Kühlrippen aufweisende Kühlvorrichtung, bei der Luft als Kühlmedium verwendet wird.

Bei dem aus DE 10 2007 024 512 A1 bekannten Getriebe ist eine aus langgestreckten Kühlrohren geformte Kühlpatrone durch eine Öffnung eines Getriebegehäuses gesteckt und mit einem Grundkörper, von dem die Kühlrohre ausgehen, in die Öffnung eingeschraubt. Die Kühlpatrone wird im Bereich eines Ölsumpfes innerhalb des Getriebes angeordnet. Dies bedeutet jedoch mitunter Einschränkungen hinsichtlich Dimensionierung und Auswahl verwendbarer Kühlvorrichtungen.

Aus DE 10 2006 020 801 A1, die ein Industriegetriebe nach dem Oberbegriff des Anspruchs 1 offenbart, DE 36 06 963 C2 und US 5,072,784 sind Getriebe mit einer Antriebswelle und einer Abtriebswelle bekannt, die durch eine Öffnung an einem Getriebegehäuse treten. Mit der Antriebswelle und der Abtriebswelle sind jeweils miteinander in Eingriff stehende Zahnräder verbunden. Darüber hinaus ist ein Kühler vorgesehen, der einen Gehäusedeckel bildet.

Der vorliegenden Erfindung liegt daher die Aufgabe zugrunde, ein Industriegetriebe mit einem effizienten Kühl- bzw. Heizsystem anzugeben, das flexibel entsprechend jeweiligen Anwendungserfordernissen dimensionierbar ist.

Diese Aufgabe wird erfindungsgemäß durch ein Industriegetriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Industriegetriebe umfaßt zumindest eine Antriebswelle und zumindest eine Abtriebswelle, die durch eine jeweilige Öffnung an einem Getriebegehäuse treten. Außerdem sind zumindest ein mit der Antriebswelle verbundenes Zahnrad und zumindest ein mit der Abtriebswelle verbundenes Zahnrad vorgesehen, die mittelbar oder unmittelbar im Eingriff miteinander stehen. Darüber hinaus weist das erfindungsgemäße Industriegetriebe einen Plattenwärmetauscher auf, der einen Gehäusedeckel bildet und mit einer innerhalb des Getriebegehäuses angeordneten Schmierstoffpumpe zur Förderung von Schmierstoff aus einem Schmierstoffsumpf verbunden ist. Die Schmierstoffpumpe ist in einem Schmierstoffverteilungs-system zwischen dem Schmierstoffsumpf und dem Plattenwärmetauscher angeordnet. Dies ermöglicht kurze Schmierstofförderwege zur Schmierstoffpumpe, so daß Druckabfälle entlang der Schmierstofförderwege minimiert werden können. Dementsprechend kann die Schmierstoffpumpe im Vergleich zu konventionellen Lösungen kleiner dimensioniert bzw. eine höhere Förderleistung realisiert werden. Des weiteren ermöglicht der Plattenwärmetauscher eine Realisierung einer hohen Kühlleistungsdichte. Dies wirkt sich positiv auf eine kompakte Getriebebauform bzw. eine erhöhte Kühlleistung aus. Außerdem ist ein Schmierstoffeinlaß des Plattenwärmetauschers innerhalb einer ersten zylindrischen Getriebegehäuseausnehmung für ein erstes Lager angeordnet. Ein Schmierstoffauslaß des Plattenwärmetauschers ist innerhalb einer zweiten zylindrischen Getriebegehäuseausnehmung für ein zweites Lager angeordnet.

Die erste und zweite zylindrische Getriebegehäuseausnehmung können beispielsweise im Getriebegehäuse vorhandene Lagerbohrungen sein. Auf diese Weise kann der Plattenwärmetauscher direkt an das Getriebe angebunden werden. Vorzugsweise sind zwischen der Schmierstoffpumpe und dem Plattenwärmetauscher vorgesehene Schmierstoffverteilungsvorrichtungen vollständig innerhalb des Getriebegehäuses angeordnet. Entsprechend einer besonders bevorzugten Ausführungsform der vorliegenden Erfindung sind zwischen der Schmierstoffpumpe und dem Plattenwärmetauscher überhaupt gar keine zusätzlichen Schmierstoffverteilungsvorrichtungen, wie Kanäle oder Leitbleche,vorgesehen. Auf diese Weise entfällt eine Verrohrung gänzlich. Dies wirkt sich wiederum positiv auf Platzbedarf und Fertigungs- bzw. Montageaufwände aus.

Entsprechend einer vorteilhaften Weiterbildung der vorliegenden Erfindung ist an einem Kühlmittelzulauf und/oder an einem Kühlmittelablauf des Plattenwärmetauschers zumindest eine Kühlmitteltemperaturüberwachungseinrichtung vorgesehen. Vorzugsweise umfaßt die Kühlmitteltemperaturüberwachungseinrichtung zumindest eine Auswerteeinheit zur Ermittlung von Kühlleistung, Getriebeüberlastung und/oder Ölalterung. Zusätzlich kann die Kühlmitteltemperaturüberwachungseinrichtung zumindest eine Alarmeinheit zur Erzeugung eines Alarms bei Überschreiten eines Schwellwerts der Kühlleistung, Getriebeüberlastung und/oder Ölalterung aufweisen. Auf diese Weise können kritische Systemzustände erkannt und signalisiert werden. Darüber hinaus kann die Kühlmitteltemperaturüberwachungseinrichtung mit einer Antriebssteuerungseinrichtung zur Regelung oder Steuerung von Motordrehzahl und/oder Motordrehmoment in Abhängigkeit von ermittelter Kühlleistung, Getriebeüberlastung und/oder Ölalterung verbunden werden. Bei kritischen Systemzuständen kann damit durch einen Antriebssteuerungseingriff ein Weiterbetrieb durch Übergang in einen sicheren Betriebszustand gewährleistet werden.

Die vorliegende Erfindung wird nachfolgend an einem Ausführungsbeispiel anhand der Zeichnung näher erläutert. Es zeigt
- Figur 1: ein erfindungsgemäßes Getriebe in Schnittdarstel- lung,
- Figur 2: das Getriebe gemäß Figur 1 in Außenansicht.

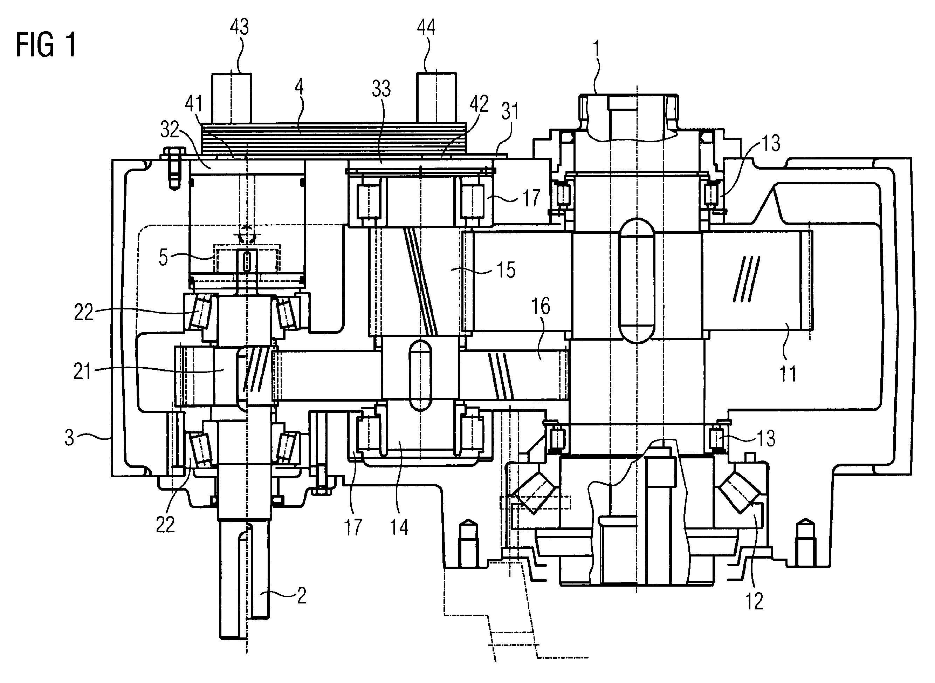

Das in Figur 1 dargestellte Getriebe umfaßt eine Abtriebswelle 1 und eine Antriebswelle 2, die durch eine jeweilige Öffnung an einem Getriebegehäuse 3 treten. Die Abtriebswelle 1 ist mittels eines Axiallagers 12 und zweier Radiallager 13 gelagert, während für die Antriebswelle 2 zwei Radiallager 22 vorgesehen sind. Des weiteren ist die Abtriebswelle 1 von einem mit einem Ritzel 15 einer Zwischenwelle 14 kämmendem Zahnkranz 11 umgeben. Die Zwischenwelle 14 ist mittels zweier Wälzlager 17 gelagert und mit einem Zahnkranz 16 verbunden, der in Eingriff mit einem Antriebswellenritzel 21 steht.

Der Plattenwärmetauscher 4 übernimmt neben seiner Funktion als Wärmetauscher auch die Funktion eines Gehäusedeckels 31. Die innerhalb des Getriebegehäuses 3 angeordnete Ölpumpe 5 zur Förderung von Öl aus einem an die Ölpumpe 5 grenzenden Ölsumpf fördert das Öl direkt in den Plattenwärmetauscher 4. Die Ölpumpe 5 wird durch die Antriebswelle 2 angetrieben und ist innerhalb eines Ölkreislaufs zwischen dem Ölsumpf und dem Plattenwärmetauscher 4 angeordnet. Entsprechend einer bevorzugten Ausführungsform sind zwischen der Ölpumpe 5 und dem Plattenwärmetauscher 4 keine zusätzlichen Ölverteilungsvorrichtungen, wie Kanäle oder Leitbleche, vorgesehen. Die Ölverteilungseinrichtungen werden in diesem Fall durch bereits im Getriebe vorhandene Lagerbohrungen gebildet.

Ein Öleinlaß 41 des Plattenwärmetauschers 4 ist innerhalb einer Lagerbohrung 32 für ein Radiallager 22 der Antriebswelle 2 angeordnet. In entsprechender Weise ist ein Ölauslaß 42 des Plattenwärmetauschers 4 innerhalb einer Lagerbohrung 33 für ein Wälzlager 17 der Zwischenwelle 14 angeordnet.

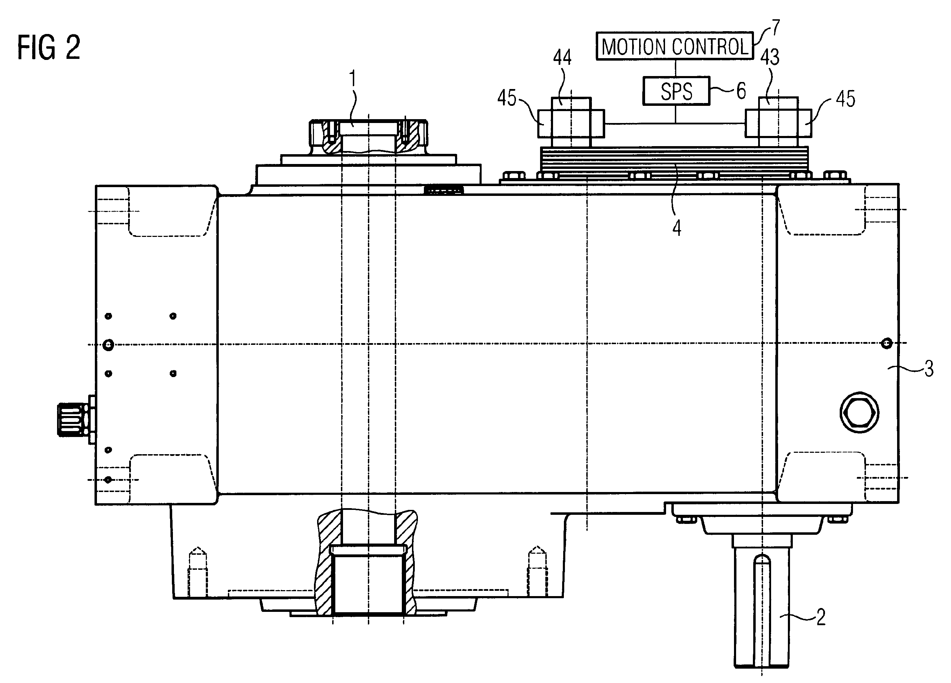

Entsprechend Figur 2 sind sowohl an einem Kühlmittelzulauf 43 als auch an einem Kühlmittelablauf 44 des Plattenwärmetauschers 4 jeweils ein Temperatursensor 45 vorgesehen. Als Kühlmittel können beispielsweise Öl oder Wasser verwendet werden. Die Temperatursensoren 45 sind mit einer Kühlmitteltemperaturüberwachungseinrichtung 6 verbunden, die beispielsweise durch eine Speicherprogrammierbare Steuerung (SPS) realisiert werden kann. Die Kühlmitteltemperaturüberwachungseinrichtung 6 umfaßt eine Auswerteeinheit zur Ermittlung von Kühlleistung, Getriebeüberlastung bzw. Ölalterung. Hierzu kann auch eine Differenz aus Zulauf- und Ablauftemperatur analysiert werden, beispielsweise durch Berechnung eines Integrals über die Differenz für ein vorgebbares Zeitintervall.

In die Kühlmitteltemperaturüberwachungseinrichtung 6 ist des weiteren eine Alarmeinheit zur Erzeugung eines Alarms bei Überschreiten eines Schwellwerts der Kühlleistung, Getriebeüberlastung bzw. Ölalterung integriert. Zusätzlich ist die Kühlmitteltemperaturüberwachungseinrichtung 6 mit einer Antriebssteuerungseinrichtung 7 zur Regelung von Motordrehzahl und Motordrehmoment verbunden. Dies erfolgt in Abhängigkeit von ermittelter Kühlleistung, Getriebeüberlastung bzw. Ölalterung.

Die vorliegende Erfindung ist nicht auf das beschriebene Ausführungsbeispiel beschränkt.

## Patentansprüche

1. Industriegetriebe mit
- zumindest einer Antriebswelle (2) und zumindest einer Abtriebswelle (1), die durch eine jeweilige Öffnung an einem Getriebegehäuse (3) treten, .
- zumindest einem mit der Antriebswelle (2) verbundenen Zahnrad (21) und zumindest einem mit der Abtriebswelle (1) verbundenen Zahnrad (11), die mittelbar oder.unmittelbar im Eingriff miteinander stehen,
- einem einen Gehäusedeckel (31) bildenden Plattenwärmetauscher (4), der mit einer Schmierstoffpumpe (5) zur Förderung von Schmierstoff aus einem Schmierstoffsumpf verbunden ist, wobei
- die Schmierstoffpumpe (5) in einem Schmierstoffverteilungssystem zwischen dem Schmierstoffsumpf und dem Plattenwärmetauscher (4) angeordnet ist, **dadurch gekennzeichnet, daß**
- innerhalb einer ersten zylindrischen Getriebegehäuseausnehmung (32) für ein erstes Lager (22) ein Schmierstoffeinlaß (41) des Plattenwärmetauschers (4) angeordnet ist,
- innerhalb einer zweiten zylindrischen Getriebegehäuseausnehmung (33) für ein zweites Lager (17) ein Schmierstoffauslaß (42) des Plattenwärmetauschers (4) angeordnet ist,
- die Schmierstoffpumpe (5) innerbalb des Getriebegehäuses angeordnet ist.

2. Industriegetriebe nach Anspruch 1,
bei dem die erste und zweite zylindrische Getriebegehäuseausnehmung (32, 33) im Getriebegehäuse (3) vorhandene Lagerbohrungen sind.

3. Industriegetriebe nach einem der Ansprüche 1 bis 2,
bei dem zwischen der Schmierstoffpumpe (5) und dem Plattenwärmetauscher (4) vorgesehene Schmierstoffverteilungsvorrichtungen vollständig innerhalb des Getriebegehäuses (3) angeordnet sind.

4. Industriegetriebe nach einem der Ansprüche 1 bis 3,
bei dem an einem Kühlmittelzulauf (43) und/oder an einem Kühlmittelablauf (44) des Plattenwärmetauschers (4) zumindest eine Kühlmitteltemperaturüberwachungseinrichtung (45) vorgesehen ist.

5. Industriegetriebe nach Anspruch 4,
bei dem die Kühlmitteltemperaturüberwachungseinrichtung (45) zumindest eine Auswerteeinheit (6) zur Ermittlung von Kühlleistung, Getriebeüberlastung und/oder Ölalterung aufweist.

6. Industriegetriebe nach Anspruch 5,
bei dem die Kühlmitteltemperaturüberwachungseinrichtung (6) zumindest eine Alarmeinheit zur Erzeugung eines Alarms bei Überschreiten eines Schwellwerts der Kühlleistung, Getriebeüberlastung und/oder Ölalterung aufweist.

7. Industriegetriebe nach einem der Ansprüche 5 oder 6,
bei dem die Kühlmitteltemperaturüberwachungseinrichtung (6) mit einer Antriebssteuerungseinrichtung (7) zur Regelung oder Steuerung von Motordrehzahl und/oder Motordrehmoment in Abhängigkeit von ermittelter Kühlleistung, Getriebeüberlastung und/oder Ölalterung verbunden ist.

## Claims

1. Industrial transmission, with
- at least one drive shaft (2) and at least one driven shaft (1) which pass through a respective orifice on a transmission housing (3),
- at least one gearwheel (21) connected to the drive shaft (2) and at least one gearwheel (11) connected to the driven shaft (1), which gearwheels are indirectly or directly in engagement with one another,
- a plate heat exchanger (4) which forms a housing cover (31) and which is connected to a lubricant pump (5) for the conveyance of lubricant out of a lubricant sump,
- the lubricant pump (5) being arranged in a lubricant distribution system between the lubricant sump and the plate heat exchanger (4),
**characterized in that**
- a lubricant inlet (41) of the plate heat exchanger (4) is arranged inside a first cylindrical transmission housing recess (32) for a first bearing (22),
- a lubricant outlet (42) of the plate heat exchanger (4) is arranged inside a second cylindrical transmission housing recess (33) for a second bearing (17),
- the lubricant pump (5) is arranged inside the transmission housing.

2. Industrial transmission according to Claim 1, in which the first and the second cylindrical transmission housing recess (32, 33) are bearing bores present in the transmission housing (3).

3. Industrial transmission according to either one of Claims 1 and 2, in which lubricant distribution devices provided between the lubricant pump (5) and the plate heat exchanger (4) are arranged completely inside the transmission housing (3).

4. Industrial transmission according to one of Claims 1 to 3, in which at least one coolant temperature monitoring device (45) is provided at a coolant inflow (43) and/or at a coolant outflow (44) of the plate heat exchanger (4).

5. Industrial transmission according to Claim 4, in which the coolant temperature monitoring device (45) has at least one evaluation unit (6) for the determination of cooling capacity, transmission overload and/or oil ageing.

6. Industrial transmission according to Claim 5, in which the coolant temperature monitoring device (6) has at least one alarm unit for generating an alarm when a threshold value of the cooling capacity, transmission overload and/or oil ageing is overshot.

7. Industrial transmission according to either one of Claims 5 and 6, in which the coolant temperature monitoring device (6) is connected to a drive control device (7) for the regulation or control of engine rotational speed and/or engine torque as a function of a determined cooling capacity, transmission overload and/or oil ageing.

## Revendications

1. Engrenage industriel comprenant
- au moins un arbre ( 2 ) menant et au moins un arbre ( 1 ) mené, qui pénètrent par une ouverture respective dans un carter ( 3 ) d'engrenage,
- au moins une roue ( 21 ) dentée reliée à l'arbre ( 2 ) menant et au moins une roue ( 11 ) dentée reliée à l'arbre ( 1 ) mené, qui sont en prises directement ou indirectement,
- un échangeur de chaleur ( 4 ) à plaques, qui forme un couvercle ( 31 ) de carter et qui est relié à une pompe ( 5 ) de lubrifiant pour véhiculer du lubrifiant d'un puits de lubrifiant, dans lequel
- la pompe ( 5 ) de lubrifiant est disposée dans un système de répartition de lubrifiant entre le puits de lubrifiant et l'échangeur de chaleur ( 4 ) à plaques,
**caractérisé en ce que**
- une entrée ( 41 ) pour du lubrifiant de l'échangeur de chaleur ( 4 ) à plaques est disposée dans un premier évidement ( 32 ) cylindrique du carter d'engrenage pour un premier palier ( 22 ),
- une sortie ( 42 ) pour du lubrifiant, de l'échangeur de chaleur ( 4 ) à plaques est disposée dans un deuxième évidement ( 33 ) cylindrique du carter d'engrenage pour un deuxième palier ( 17 ),
- la pompe ( 5 ) de lubrifiant est disposée à l'intérieur du carter d'engrenage.

2. Engrenage industriel suivant la revendication 1,
dans lequel le premier et le deuxième évidements ( 32, 33 ) cylindriques du carter d'engrenage sont des trous de palier prévus dans le carter ( 3 ) d'engrenage.

3. Engrenage industriel suivant l'une des revendications 1 à 2, dans lequel des dispositifs de répartition de lubrifiant prévus entre la pompe ( 5 ) de lubrifiant et l'échangeur de chaleur ( 4 ) à plaques sont disposés complètement dans le carter ( 3 ) d'engrenage.

4. Engrenage industriel suivant l'une des revendications 1 à 3, dans lequel au moins un dispositif ( 45 ) de contrôle de la température d'un fluide de refroidissement est prévu sur une admission ( 43 ) de fluide de refroidissement et/ou sur une évacuation ( 44 ) de fluide de refroidissement de l'échangeur de chaleur ( 4 ) à plaques.

5. Engrenage industriel suivant la revendication 4,
dans lequel le dispositif ( 45 ) de contrôle de la température du fluide de refroidissement comporte au moins une unité ( 6 ) d'évaluation pour la détermination de la puissance de refroidissement, de la surcharge de l'engrenage et/ou du vieillissement de l'huile.

6. Engrenage industriel suivant la revendication 5,
dans lequel le dispositif ( 6 ) de contrôle de la température du fluide de refroidissement comporte au moins une unité d'alerte pour la production d'une alerte, lorsqu'une valeur de seuil de la puissance de refroidissement, de la surcharge de l'engrenage et/ou du vieillissement de l'huile est dépassée.

7. Engrenage industriel suivant l'une des revendications 5 ou 6, dans lequel le dispositif ( 6 ) de contrôle de la température du fluide de refroidissement est relié à un dispositif ( 7 ) de commande d'entraînement pour la régulation ou la commande de la vitesse de rotation du moteur et/ou du couple du moteur en fonction de la puissance de refroidissement, de la surcharge de l'engrenage et/ou du vieillissement de l'huile, qui a été déterminé.
